# EUROPÄISCHE PATENTSCHRIFT

(11) **EP 1 719 992 B1**
(45) Veröffentlichungstag und Bekanntmachung des Hinweises auf die Patenterteilung: **02.01.2008**
(21) Anmeldenummer: 06008166.8
(22) Anmeldetag: 20.04.2006
(51) Int. Cl.: G01L 5/00, G01M 13/04, F16C 29/00, F16C 29/06

(54) **Linearwälzlager mit am Führungswagen angebrachtem Dehnungsmessstreifen**
Linear rolling element bearing with strain gauge attached to the carriage
Palier à roulement linéaire avec jauge extensométrique appliquée au chariot de guidage

(30) Priorität: 04.05.2005 DE 102005020811
(43) Veröffentlichungstag der Anmeldung: 08.11.2006
(73) Patentinhaber: Schaeffler KG, 91074 Herzogenaurach (DE)
(72) Erfinder: Rudy, Dietmar, 66501 Kleinbundenbach (DE); Rudy, Bettina, 66501 Kleinbundenbach (DE)

(56) Entgegenhaltungen:
- EP-A- 0 905 486
- EP-A- 1 502 700
- CH-A5- 674 668
- DE-A1- 10 307 882
- US-A- 4 884 461
- PATENT ABSTRACTS OF JAPAN Bd. 2003, Nr. 12, 5. Dezember 2003 (2003-12-05) -& JP 2003 309983 A (KYOCERA CORP), 31. Oktober 2003 (2003-10-31)
- PATENT ABSTRACTS OF JAPAN Bd. 008, Nr. 061 (M-284), 23. März 1984 (1984-03-23) -& JP 58 211841 A (TOKYO SHIBAURA DENKI KK), 9. Dezember 1983 (1983-12-09)

## Beschreibung

Die vorliegende Erfindung betrifft Linearwälzlager, mit einem auf einer Führungsschiene längsverschieblich angeordneten, etwa u-förmig ausgebildeten Führungswagen.

Aus EP 1 502 700 A1 beispielsweise ist ein gattungsbildendes Linearwälzlager bekannt geworden, bei dem ein etwa u-förmig ausgebildeter Führungswagen auf einer Führungsschiene längsverschieblich angeordnet ist. Der Führungswagen weist im Wesentlichen zwei Schenkel und einen die beiden Schenkel verbindenden Rücken auf, wobei der Führungswagen mit seinen beiden Schenkeln die Führungsschiene umgreift. Wälzkörper wälzen an Laufbahnen des Führungswagens und der Führungsschiene unter Vorspannung ab, wobei die Laufbahnen an einander zugewandten Seiten der Führungsschiene und der beiden Schenkel ausgebildet sind. Um den Zustand des Linearwälzlagers besser überprüfen zu können, sind an den beiden Schenkeln des Führungswagens an dessen Außenseite Sensoren angebracht, die durch den Dehnmessstreifen gebildet sind. Diese Sensoren messen Verformungen an dem Führungswagen, die durch an dem Führungswagen angreifende Kräfte verursacht sind.

Üblicherweise wälzen die Wälzkörper unter Vorspannung an den Laufbahnen ab. Wenn diese Vorspannung aufgrund eines Verschleißes an den Laufbahnen oder an den Wälzkörpern abnimmt, hat auch diese Abnahme der Vorspannung eine elastische Verformung des Führungswagens zur Folge. Auch diese Verformung kann von den DMS gemessen werden. Diese Sensoren sind an eine Auswerteeinheit angeschlossen. Die von dem Sensor als Messsignal an die Auswerteeinheit weitergegebene Verformung kann in der Auswerteeinheit weiter verwertet werden. Beispielsweise kann eine Störmeldung ausgegeben werden, wenn ein erhöhter Verschleiß an dem Linearwälzlager festgestellt wurde.

An derartigen Linearwälzlagern können Kräfte aus unterschiedlichen Richtungen angreifen. Um die kraftbedingten Verformungen zu messen, sind in der EP 1 502 700 A1 in einem Ausführungsbeispiel vier Sensoren vorgesehen, deren Messsignale über einen Vorverstärker in einen A/D-Wandler einer Auswerteeinrichtung zugeführt werden. Insgesamt vier Messsignale werden demzufolge verarbeitet, um schließlich eine Aussage über den Zustand des Linearwälzlagers zu erhalten. Sollen nur Zug- oder Drückkräften bestimmt werden, könnte eine Messstelle ausreichen.

Aufgabe der vorliegenden Erfindung ist es, ein Linearwälzlager nach den Merkmalen des Oberbegriffs des Anspruchs 1 anzugeben, bei dem die Feststellung des Zustandes des Linearwälzlagers vereinfacht ist.

Erfindungsgemäß wird diese Aufgabe dadurch gelöst, dass der als Dehnmessstreifen ausgebildete Sensor an der der Führungsschiene zugewandten Seite des Rückens des Führungswagens mittig zwischen den beiden Schenkeln angebracht ist. Dieser Ort ist zur internen äquivalenten Lagerbelastung proportional. Das bedeutet, alle an dem Linearwälzlager angreifenden Kräfte können als äquivalente Lagerbelastung an diesem erfindungsgemäß vorgesehenen Ort umgerechnet werden. Anstelle einer Vielzahl von Sensoren zur Beurteilung der an dem Linearwälzlager angreifenden Kräfte kann erfindungsgemäß lediglich ein Sensor ausreichend sein, um Rückschluß auf die Vorspannung und den Verschleiß des Linearwälzlagers zu ziehen. Es können aber auch maximal zwei Sensoren besonders günstig sein, die dann mit Abstand zueinander beide mittig zwischen den Schenkeln angeordnet sind. Für zwei Sensoren kann eine Brückenschaltung vorgesehen werden, die besonders gute Messwerte ermöglicht. Die erfindungsgemäß vorgeschlagene Messstelle für den Dehnmessstreifen liefert außerdem in Abhängigkeit von der äquivalenten Lagerbelastung ein lineares Signal, was für Darstellung des Verschleißes oder der Vorspannung vorteilhaft sein kann.

Üblicherweise ist der Rücken des Führungswagens mit Durchgangsöffnungen beispielsweise zur Befestigung eines Maschinenteils versehen. Beispielsweise kann ein Werkzeug oder ein anderes Maschinenteil an den Rücken angeflanscht werden. Es wurde herausgefunden, dass die vom Sensor weitergegebenen Messsignale umso genauer Rückschlüsse auf die Lagerbelastung zulassen, je dichter der Sensor bei der Durchgangsöffnung angeordnet ist. Eine erfindungsgemäße Weiterbildung sieht daher vor, den Dehnmessstreifen in unmittelbarer Nachbarschaft zu der Durchgangsöffnung anzuordnen.

Vorzugsweise ist der kleinste Abstand zwischen dem Dehnmessstreifen und der Durchgangsöffnung ≥ Null und kleiner als die Öffnungsweite der Durchgangsöffnung. Innerhalb dieses angegebenen Bereiches können sehr genaue Rückschlüsse auf die Lagerbelastung aufgrund der weitergegebenen Messsignale ermittelt werden.

Nachstehend wird die Erfindung anhand eines in zwei Figuren abgebildeten Ausführungsbeispielesnäher erläutert. Es zeigen:
- Figur 1: ein erfindungsgemäßes Linearwälzlager in perspektivischer Darstellung und
- Figur 2: den Führungswagen des Linearwälzlagers aus Figur 1 in perspektivischer Darstellung.

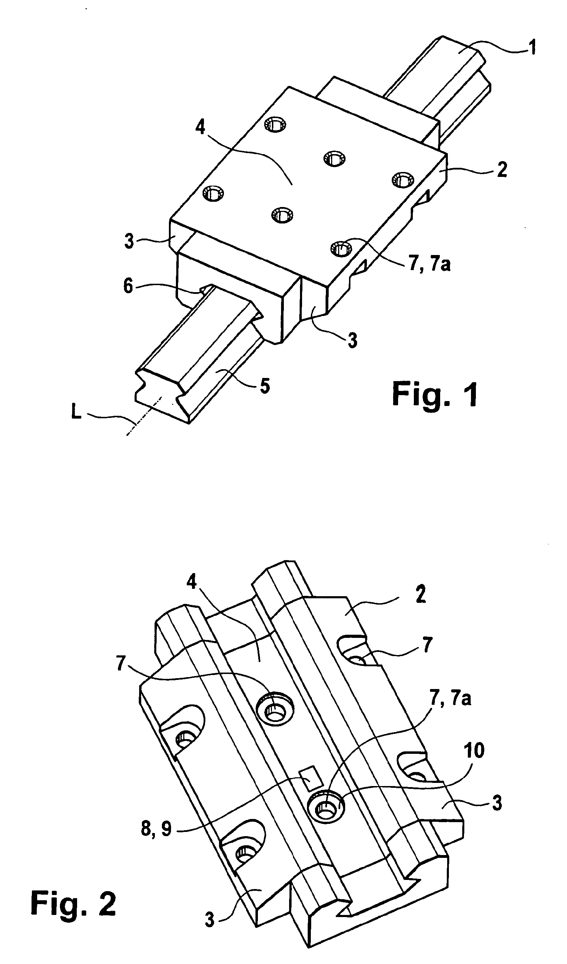

Das in Figur 1 abgebildete erfindungsgemäße Linearwälzlager weist einen auf einer Führungsschiene 1 längsverschieblich angeordneten Führungswagen 2 auf. Der Führungswagen 2 weist im Wesentlichen zwei Schenkel 3 und einen die beiden Schenkel 3 verbindenden Rücken 4 auf. Der Führungswagen 2 umgreift mit seinen beiden Schenkeln die Führungsschiene 1. Hier nicht weiter abgebildete Wälzkörper wälzen an Laufbahnen 5, 6 der Führungsschiene 1 und des Führungswagens 2 in bekannter Weise unter Vorspannung ab. Die Laufbahnen 5, 6 sind aneinander zugewandten Seiten der Führungsschiene 1 und der beiden Schenkel 3 ausgebildet.

Der Rücken 4 des Führungswagens 2 ist mit einer Vielzahl von als Bohrungen 7a ausgeführten Durchgangsöffnungen 7 versehen. Zwei dieser Durchgangsöffnungen 7 liegen mittig über der Längsachse L der Führungsschiene 1. Diese beiden Durchgangsöffnungen 7 liegen auch mittig zwischen den beiden Schenkeln 3 des Führungswagens 2.

Der Figur 2 ist zu entnehmen, dass an der der Führungsschiene 1 zugewandten Seite des Rückens 4 ein als Dehnmessstreifen 8 ausgeführter Sensor angebracht ist. Dieser Dehnmessstreifen 8 kann beispielsweise angeklebt sein. Dieser Dehnmessstreifen ist ebenso wie bei dem Ausführungsbeispiel gemäß EP 1 502 700 A1 über einen Verstärker und einen A/D-Wandler an eine Auswerteeinrichtung angeschlossen. Diese Bauelemente sind hier nicht weiter beschrieben.

Der Dehnmessstreifen 8 liegt mittig zwischen den beiden Schenkeln 3 des Führungswagens 2 und mittig über der Längsachse L der Führungsschiene 1. An dem Führungswagen 2 angreifende Kräfte - als Zug- oder Druckkraft senkrecht zum Rücken 4, oder als Querkraft - können als äquivalente Lagerbelastung angegeben werden, die mittig zwischen den beiden Schenkeln 3 des Führungswagens 2 angreift und senkrecht zur Längsachse L der Führungsschiene 1 steht. Elastische Verformungen des Führungswagens 2 aufgrund der wirkenden Kräfte bewirken eine Verformung des Rückens an der Messstelle, wobei ein linearer Zusammenhang zwischen dem Messsignal des Dehnmessstreifens und der äquivalenten Lagerbelastung besteht.

Wenn die interne Vorspannung bei dem erfindungsgemäßen Linearwälzlager aufgrund von starkem Verschleiß der Laufbahnen 5, 6 oder der hier nicht abgebildeten Wälzkörper abnimmt, nimmt die elastische Verformung des Führungswagens 2 ab, wodurch der Dehnmessstreifen 8 ein verändertes Messsignal liefert. Sollte die Vorspannung außerhalb eines vorbestimmten Toleranzbereiches liegen, kann bei einem entsprechenden Messsignal beispielsweise eine Fehlermeldung ausgelöst werden.

Wenn aufgrund von Verschmutzung die Verschiebekraft zum Verschieben des Führungswagens 2 entlang der Führungsschiene 1 zunimmt, können aufgrund dieser erhöhten Verschiebekraft elastische Verformungen des Führungswagens 2 die Folge sein. Auch in dieser Situation ist ein verändertes Messsignal des Dehnmessstreifens 8 die Folge.

Bei dem erfindungsgemäßen Linearwälzlager kann mit einem an dem erfindungsgemäß vorgeschlagenen Ort vorgesehenen einzigen Dehnmessstreifen eine Aussage über die Lagerbelastung und somit über den Zustand des Linearwälzlagers getroffen werden.

Der Figur 2 ist zu entnehmen, dass der Dehnmessstreifen 8 in unmittelbarer Nachbarschaft zu der Durchgangsöffnung 7 angeordnet ist. Vorliegend ist diese Durchgangsöffnung als Bohrung 7a mit Senkloch 10 zur Aufnahme eines hier nicht dargestellten Schraubenkopfes versehen. Der Abstand zwischen dem Rand des Senkloches 10 und dem Rand des Dehnmessstreifes 8 ist ≥ Null und kleiner als der Durchmesser des Senklochs 10. In unmittelbarer Nachbarschaft des Dehnmessstreifens 8 zu der Durchgangsöffnung 7 besteht ein guter linearer Zusammenhang zwischen der äquivalenten Lagerbelastung und des Messsignales.

Das hier beschriebene Ausführungsbeispiel kann modifiziert werden. Eine modifizierte erfindungsgemäße Lösung besteht darin, dass zwei Sensoren 9 in der Nähe der beiden Bohrungen 7a angeordnet sind, je ein Sensor 9 zwischen dem stirnseitigen Ende des Führungswagens und der nächstgelegenen Bohrung 7a. In diesem Fall ist kein Sensor zwischen den Bohrungen 7a vorgesehen.

### Bezugszahlenliste

- 1: Führungsschiene
- 2: Führungswagen
- 3: Schenkel
- 4: Rücken
- 5: Laufbahn
- 6: Laufbahn
- 7: Durchgangsöffnung
- 7a: Bohrung
- 8: Dehnmessstreifen
- 9: Sensor
- 10: Senkloch

## Patentansprüche

1. Linearwälzlager, mit einem auf einer Führungsschiene (1) angeordneten, etwa u-förmigen Führungswagen (2), der zwei Schenkel (3) und einen die beiden Schenkel (3) verbindenden Rücken (4) aufweist, wobei der Führungswagen (2) mit seinen beiden Schenkeln (4) die Führungsschiene (1) umgreift, und wobei Wälzkörper an Laufbahnen (5, 6) des Führungswagens (2) und der Führungsschiene (1) unter Vorspannung abwälzen, wobei die Laufbahnen (5, 6) an einander zugewandten Seiten der Führungsschiene (1) und der beiden Schenkel (3) ausgebildet sind, und wobei an dem Führungswagen (2) wenigstens ein als Dehnmessstreifen (8) ausgebildeter Sensor (9) angebracht ist, **dadurch gekennzeichnet, dass** der als Dehnmessstreifen (8) ausgebildete Sensor (9) an der der Führungsschiene (1) zugewandten Seite des Rückens (4) des Führungswagens (2) mittig zwischen den beiden Schenkeln (3) angebracht ist.

2. Linearwälzlager nach Anspruch 1, bei dem der Rücken (4) mit wenigstens einer Durchgangsöffnung (7) versehen ist, wobei der Dehnmessstreifen (8) in unmittelbarer Nachbarschaft zu der Durchgangsöffnung (7) angeordnet ist.

3. Linearwälzlager nach wenigstens einem der vorangegangenen Ansprüche, bei dem die Durchgangsöffnung (7) mittig zwischen den beiden Schenkeln (3) angeordnet ist.

4. Linearwälzlager nach Anspruch 2, bei dem der kleinste Abstand zwischen dem Dehnmessstreifen (8) und der Durchgangsöffnung (7) größer oder gleich Null und kleiner als die Öffnungsweite der Durchgangsöffnung (7) ist.

## Claims

1. Linear rolling bearing, having an approximately U-shaped guide carriage (2) which is arranged on a guide rail (1) and has two limbs (3) and a spine (4) which connects the two limbs (3), the two limbs (3) of the guide carriage (2) engaging around the guide rail (1), and rolling bodies rolling on raceways (5, 6) of the guide carriage (2) and of the guide rail (1) under preload, the raceways (5, 6) being formed on sides, which face one another, of the guide rail (1) and of the two limbs (3), and at least one sensor (9), which is embodied as a strain gauge (8), being attached to the guide carriage (2), **characterized in that** the sensor (9), which is embodied as a strain gauge (8), is attached centrally between the two limbs (3) to that side of the spine (4) of the guide carriage (2) which faces the guide rail (1).

2. Linear rolling bearing according to Claim 1, in which the spine (4) is provided with at least one passage opening (7), the strain gauge (8) being arranged in the immediate vicinity of the passage opening (7).

3. Linear rolling bearing according to at least one of the preceding claims, in which the passage opening (7) is arranged centrally between the two limbs (3).

4. Linear rolling bearing according to Claim 2, in which the smallest distance between the strain gauge (8) and the passage opening (7) is greater than or equal to zero and smaller than the opening width of the passage opening (7).

## Revendications

1. Palier à roulement linéaire, comprenant un chariot de guidage (2), sensiblement en forme de U, disposé sur un rail de guidage (1), qui comporte deux branches (3) et un dos (4) reliant les deux branches (3), dans lequel le chariot de guidage (2) entoure le rail de guidage (1) avec ses deux branches (3), et dans lequel des corps de roulement roulent sous précontrainte sur des pistes de roulement (5, 6) du chariot de guidage (2) et du rail de guidage (1), dans lequel les pistes de roulement (5, 6) sont formées sur des côtés tournés l'un vers l'autre du rail de guidage (1) et des deux branches (3), et dans lequel au moins un capteur (9), constitué par une jauge extensométrique (8), est disposé sur le chariot de guidage (2), **caractérisé en ce que** le capteur (9) constitué par une jauge extensométrique (8) est placé sur le côté du dos (4) du chariot de guidage (2) tourné vers le rail de guidage (1), au milieu entre les deux branches (3).

2. Palier à roulement linéaire selon la revendication 1, dans lequel le dos (4) est pourvu d'au moins une ouverture de passage (7), dans lequel la jauge extensométrique (8) est disposée à proximité immédiate de l'ouverture de passage (7).

3. Palier à roulement linéaire selon au moins une des revendications précédentes, dans lequel l'ouverture de passage (7) est disposée au milieu entre les deux branches (3).

4. Palier à roulement linéaire selon la revendication 2, dans lequel la plus petite distance entre la jauge extensométrique (8) et l'ouverture de passage (7) est supérieure ou égale à zéro et inférieure à la largeur d'ouverture de l'ouverture de passage (7).
